# EUROPEAN PATENT APPLICATION

(11) **EP 4 840 374 A1**
(43) Date of publication of application: **18.11.2026**
(21) Application number: 25185643.1
(22) Date of filing: 26.06.2025
(51) Int. Cl.: A47J 37/06, A47J 37/07

(54) **A COOKING PLATE AND A COOKING GRILL COMPRISED THEREOF**

(30) Priority: 14.05.2025 PT 2025120259
(71) Applicant: FLAMA - Fàbrica de Loucas e Electrodomésticos, S.A., 3700 - 727 Cesar (PT)
(72) Inventor: SILVA MARTINS, JOÃO MIGUEL DA, Veiros Estarreja (PT)
(74) Representative: do Nascimento Gomes, Rui

(57) **Abstract**

It is disclosed a cooking plate for a cooking grill comprising a peripheral section (1), a cooking surface and coupling means to a cooking grill. The cooking surface (2.1, 2.2) is formed by at least four segments (2a, 2b, 2c, 2d), each segments forming an angle of inclination in relation to the horizontal axis of the cooking plate, and comprises ribs (4) and slots (5) arranged at the spacing between two consecutive ribs (4). The angular arrangements of the segments (2a, 2b, 2c, 2d), as well as the configurations of ribs (4) and slots (5) with a specified pattern, present a synergy that favours the distribution of heat from the areas closest to the heat source to the areas furthest from it, thereby optimising the performance of the cooking grill, by providing a more uniform distribution of heat throughout the cooking surface (2.1, 2.2).

## Description

### TECHINCAL FIELD

The present disclosure is enclosed in the technical field of cooking grills. In particular, it relates to cooking plates for cooking grills.

### PRIOR ART

A cooking grill typically consists of a support module, a heating module and a cooking module. The support module supports the body of the grill on a surface and is usually made up of a base to which a number of supports, in the form of feet, are attached. The heating module is inserted into the body of the grill and includes a heat generation unit, which can operate through the combustion of charcoal or gas, or through electrical energy. Depending on the source responsible for generating the heat, the heating module may include specific elements. In the context of a charcoal grill, for example, the heat generation unit needs to include a deposition vessel to accommodate the charcoal, which can be associated with a tray of fuel gel to facilitate the start of combustion, making it more efficient and safer. To this end, the body of the grill can be provided with air vents to promote air circulation and favour the combustion process. Notwithstanding, the heating module can further include a ventilation unit to control the supply of oxygen to be made available to the heat generation unit and thus optimise control of the combustion process and the heat that is produced and made available to the cooking module.

In its turn, the cooking module is where the food is cooked using the heat that is generated by the heating module. It is therefore positioned at the top of the grill body, as opposed to the support module. The cooking module may be formed by a cooking grid or by a cooking plate.

In particular, the state-of-the-art cooking plates are designed to distribute heat uniformly over the entire cooking surface, however, it can be seen that the performance achieved so far falls far short of what would be desirable, with a non-negligible temperature differential between the centre and peripheral areas, which not only hampers the efficiency of the cooking grill but also the whole process of cooking food. Furthermore, there are currently no plates that are specially adapted to charcoal grills and that allow for easy refuelling.

The present solution intended to innovatively overcome such issues.

### SUMMARY OF THE DISCLOSURE

It is an object of the present disclosure a cooking plate for a cooking grill, which comprises technical features specially designed to optimise the performance of a cooking grill by providing a more uniform distribution of heat throughout the cooking surface, allowing the cooking process to be optimized and also achieving better efficiency in terms the cooking grill's consumption.

To this end, the cooking plate consists of a peripheral section formed by a containment recess, a cooking surface and coupling means configured to operatively connect the cooking plate to a cooking grill.

In particular, in order to achieve said advantages, the cooking surface is formed by at least four segments, in which each of the segments forms an angle of inclination α in relation to the horizontal axis of the cooking plate, and comprises ribs, which project from a base of the cooking surface, and are arranged radially along said surface and spaced apart from each other. In addition, the base of the cooking surface further comprises slots arranged at the spacing between two consecutive ribs and spaced apart from each other. More particularly, the positioning of the slots along the cooking surface is such that it defines a plurality of two-dimensional concentric annular elements of hierarchical size, each annular element groups together slots of substantially equal length, defining the width of the respective annular element, and the width of each element decreases as the size of said element increases.

Consequently, the angular arrangements of the segments that make up the cooking surface, as well as the configurations of ribs and slots with the specified pattern, present a synergy that favours the distribution of heat from the areas closest to the heat source to the areas furthest from it, thereby optimising the performance of the cooking grill.

In an advantageous configuration of the cooking plate, the cooking surface can be further subdivided into an intermediate section and a centre section, where the plurality of concentric annular shaped elements is formed in the intermediate section and the centre section has no slots.

The centre section can be a movable part, detachable from the intermediate section, and comprised of engaging means configured to allow it to rotate relative to the intermediate section. This configuration is particularly advantageous in the case of the cooking grill to which the cooking plate is coupled to is a charcoal grill, since the rotation of the movable part that makes up the centre section may allow the access to the charcoal depositing vessel, so as to supply the grill with charcoal easily and quickly.

### DESCRIPTION OF FIGURES

Figure 1 is a cut view representation of an embodiment of the cooking plate, illustrating the angular arrangement, α, of the cooking surface in relation to the horizontal axis of the cooking plate. The reference signs represent:
   1 - peripheral section;
   2.1 - intermediate section;
   2.2 - centre section;
   3 - coupling means.
Figure 2 is representation of an embodiment of the cooking plate illustrating its main constituent elements from a top view, and wherein the reference signs represent:
   1 - peripheral section;
   2 - cooking surface;
   2a, 2b, 2c, 2d - cooking surface segments;
   2.1 - intermediate section;
   2.2 - centre section;
   4 - ribs;
   5 - slots.
Figure 3 is a top view representation of an embodiment of the intermediate section of the cooking surface, illustrating the hierarchical-sized two-dimensional concentric annular shaped elements. The reference signs represent:
   1 - peripheral section;
   2.1 - intermediate section;
   4 - ribs;
   5 - slots;
   6 - concentric annular shaped elements;
   6.1 - inner face of the annular shaped element;
   6.2 - outer face of the annular shaped element.
Figure 4 is a close-up and cross-section view of the ribs that form part of the base of the cooking surface, which project from said base to a height of h, and whose side surfaces have an angular arrangement of β. The reference signs represent:
   2 - cooking surface;
   4 - ribs;
   5 - slot.
Figure 5 is a perspective view of an embodiment of the cooking plate, illustrating the centre section of the cooking surface in particular its rotational capability in relation to the intermediate section, which allows it to switch between a closed and an open position (position illustrated in the figure). The reference signs represent:
   1 - peripheral section;
   2.1 - intermediate section;
   2.2 - centre section;
   4 - ribs;
   5 - slots.

### DETAILED DESCRIPTION

The more general configurations of the present disclosure are described in the Summary of the disclosure. Such configurations are detailed below in accordance with other advantageous and/or preferred embodiments of implementation of the present disclosure.

The first object of the present disclosure is a cooking plate for a cooking grill.

The cooking plate described herein is provided with functional features which enable it to be operatively connected to a state-of-the-art cooking grill. The expression "operatively connected" is intended to emphasise that the coupling between the cooking plate and the cooking grill is carried out in such a way as to guarantee the normal operation of the cooking grill and the execution of the food cooking function for which the cooking plate of the present disclosure is intended.

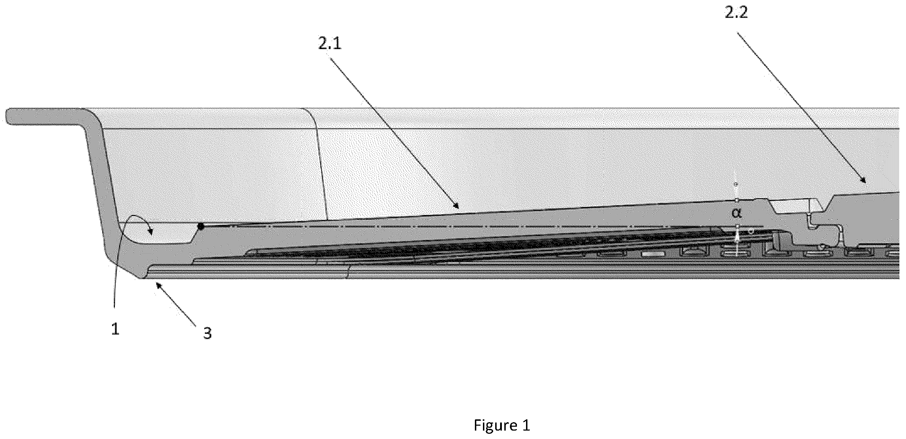

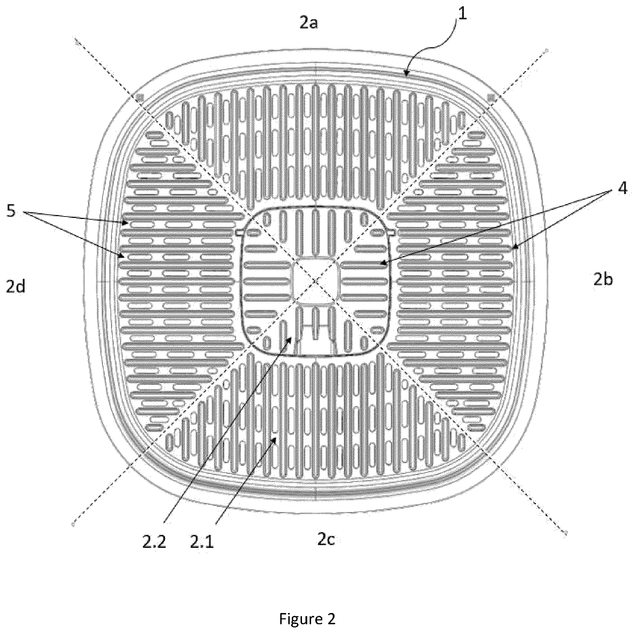

With reference to figures 1 and 2, in a preferred aspect of the cooking plate, it is comprised by a peripheral section (1) formed by a containment recess, a cooking surface (2) and coupling means (3) configured to operatively connect the cooking plate to a grill.

The cooking surface (2) is the section of the cooking plate responsible for carrying out the food preparation process. As shown in figure 1, the cooking surface (2) is designed to form an angle of inclination, α, with respect to the horizontal axis of the cooking plate, which is adapted to drain residues resulting from the cooking process into the containment recess. In addition, this angled arrangement makes it possible to equilibrate the temperature values on the cooking surface (2). In fact, since the heat source of a cooking grill is typically aligned with the centre of the cooking plate, the temperatures on the corresponding part of the cooking surface (2) are naturally higher. However, the inclined arrangement of the cooking surface (2) results in that part being positioned further away from the heat source, and at a higher height than any other point along the cooking surface, in relation to a horizontal reference axis.

To implement this angular arrangement without compromising the homogeneity of the temperatures, the cooking surface (2) is decomposed into at least four segments (2a-2d), wherein each segment of the cooking surface forms the angle of inclination α in relation to the horizontal axis of the cooking plate. The reason for the cooking surface being divided into at least 4 segments (2a-2d) is to adapt the implementation of the angular configuration α, to the typical shape of a cooking plate, which is substantially quadrilateral. In the context of the present application, a substantially quadrilateral shape includes any rectangular or quadrangular form, with pointed or rounded vertices, so that each segment (2a-2d) is formed by one of the sides of the cooking plate and extends inwards, acquiring a substantially triangular shape, as shown in figure 2. This decomposition of the cooking surface (2) into at least four segments (2a-2d) favours the homogeneity of heat on the cooking surface (2), since it allows that points on the cooking surface that are at the same distance from the centre of the cooking surface will be at the same height, in relation to a horizontal reference axis due to the angular arrangement of each segment.

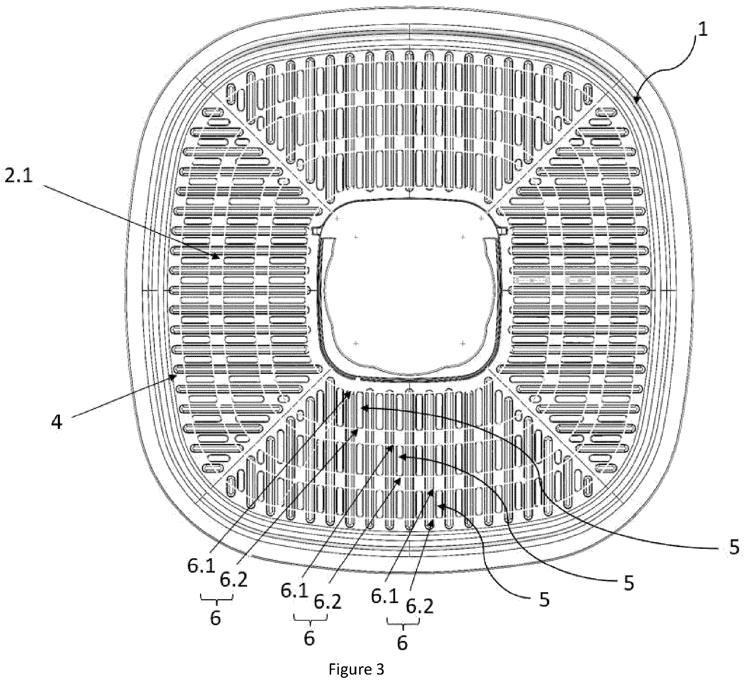

The cooking surface (2) is comprised by ribs (4), which project from a base of the cooking surface (2), and are arranged radially along said surface and spaced apart from each other. The base of the cooking surface (2) further comprises slots (5), that are arranged at the spacing between two consecutive ribs (4) and spaced apart from each other. More particularly, the slots (5) are positioned along the cooking surface (2) in order to define a plurality of hierarchical-sized two-dimensional concentric annular shaped elements (6), comprised of an inner face (6.1) and an outer face (6.2), as shown in figure 3.

In the context of the present disclosure, an annular shaped element may have a geometric shape that follows the outer shape of the cooking plate, i.e., being substantially quadrilateral, and having a central hole. The annular shaped elements (6) are concentric, since they all share the same centre, which coincides with the centre of the cooking plate and the cooking surface (2). These elements (6) are of different sizes and are arranged from the smallest, which is closest to the centre of the cooking surface (2), to the largest, positioned furthest from the cooking surface (2) and closest to the peripheral section (1). In the context of present disclosure, the size of such an element (6) may be measured in terms of the perimeter of its inner (6.1) or outer (6.2) faces, or in term of its area. Since the smaller elements (6) are inserted into the larger ones, due to the concentric arrangement, they are referred to as hierarchical-sized elements.

An example of an annular shaped element (6) is a rounded square ring, as illustrated in figure 3. More particularly, each annular shaped element (6) groups together slots (5) of substantially equal length, defining the width of the respective element (6), which decreases as the size of said element (6) increases. This arrangement of elements (6) creates a pattern of slots (5), interspersed with zones without slots (5), in which slots (5) of shorter length constitute elements (6) of larger size and therefore further away from the centre of the cooking surface (2). On the other hand, slots (5) with a longer length constitute elements (6) that are smaller in size and therefore closer to the centre of the cooking surface (2). In this way, the pattern of slots (5) that the cooking surface (2) allows more hot air to escape in the areas closest to the heat source, i.e. in the centre of the cooking surface (2), and reduces hot air escape in the areas furthest away, thus balancing the temperatures on the cooking surface (2).

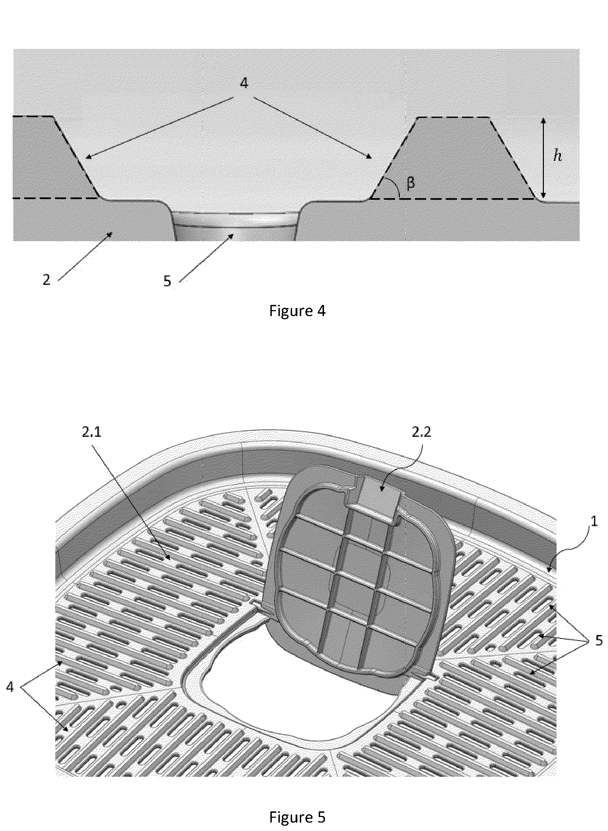

Also important for creating these hot air escape channels is the presence of ribs (4). These not only favour the process of cooking food, giving it the marked appearance that is so characteristic of a grill, but also allow the food to be cooked to be raised from the base of the cooking surface (2) where the slots (5) are, to a height h, so as to allow air to pass through, which is essential for balancing temperatures and favouring the uniform distribution of heat along the cooking surface (2). To maximise these effects, the ribs (4) may be uniformly spaced, as is the spacing between slots (5). Figure 4 is a cutaway view of the cooking plate, which illustrates the positional relationship between the ribs (4) and slots (5), as well as the angular arrangement β of the ribs' (4) side faces.

The containment recess forming the peripheral section (1) is such that it allows the retention of fats or wastes resulting from the food preparation process. These residues are deposited in the containment recess due to the inclination α of the cooking surface, preventing their agglomeration along the cooking surface (2) from blocking the hot air escape channels thus compromising the uniform distribution of heat throughout the cooking surface (2) during the cooking process.

The coupling means (3) may be positioned along the periphery of the cooking plate opposite the peripheral section (1), and are configured to cause the cooking plate to rest, by action of its weight, in a stable manner on support means of a cooking grill. In fact, the cooking plate first object of the present disclosure may be obtained by means of an aluminium injection casting process, which provides it with a necessary weight to enable it, in combination with the coupling means (3), to achieve the aforementioned stability.

In an advantageous configuration of the cooking plate, the cooking surface (2) is subdivided into an intermediate section (2.1) and a centre section (2.2), and wherein the plurality of concentric annular shaped elements (6) is formed in the intermediate section (2.1) and the centre section (2.2) is slotless, i.e., is devoid of slots (5). This particular configuration for the cooking plate, which is illustrated by figure 1, prevents residues from the cooking process from contaminating the heat generation unit of a cooking grill, which is typically positioned lower down and aligned with the centre of the cooking plate. Furthermore, it allows a side of the cooking surface (2) opposite the centre section (2.2) to be comprised by a diffuser in order to improve heat diffusion in this section, if necessary. Nevertheless, by segmenting the cooking surface (2) and its angular arrangement, it is possible to achieve a temperature balance on the cooking surface (2).

Additionally, as illustrated in figure 5, the centre section (2.2) of the cooking surface (2) may be a movable part, detachable from the intermediate section (2.1), and which comprises engaging means configured to provide removable attachment of the centre section (2.2) to the intermediate section (2.1). More particularly, the engaging means may additionally be configured to provide rotation of the centre section (2.2) relative to the intermediate section (2.1), causing the centre section (2.2) to switch between two positions: a closed position, creating continuity on the cooking surface (2), as illustrated, for example, in figure 1; and an open position, as illustrated in figure 5. This configuration is particularly advantageous in the case of the cooking grill to which the cooking plate is coupled to is a charcoal grill, since the rotation of the movable part that makes up the centre section allows access to the charcoal depositing vessel to supply the grill with charcoal easily and quickly, and without interrupting the cooking process.

The second object of the present disclosure is a cooking grill comprised by the cooking plate, the first object of the present disclosure. More particularly, the cooking plate described herein is provided with functional features that are not the subject of the present disclosure, and which enable it to be operatively connected to a state-of-the-art cooking grill. The coupling between the cooking plate and the cooking grill is carried out in such a way as to guarantee the normal operation of the cooking grill and the execution of the food cooking function for which the cooking plate of the present disclosure is intended.

In connection with this, the third object of the present disclosure is a charcoal cooking grill comprised by a charcoal depositing vessel and by the cooking plate, the first object of the present disclosure. More particularly, the charcoal depositing vessel and the cooking plate are arranged in relation to each other so that the movable part constituting the centre section (2.2) of the cooking surface (2) of the cooking plate is projected to move from a closed position to an open position so as to enable access to the charcoal depositing vessel. In this way, the action of refilling the charcoal is significantly improved, since all that is needed is to move the centre section (2.2) to an open position without interrupting the cooking process, instead of removing the cooking plate to enable the access to the charcoal depositing vessel.

### EMBODIMENTS

In a first object of the present disclosure, it is disclosed a cooking plate for a cooking grill.

In a preferred embodiment of the cooking plate, it is comprised by a peripheral section (1) formed by a containment recess, a cooking surface (2) and coupling means (3) configured to operatively connect the cooking plate to a grill; the cooking plate being characterised in that the cooking surface (2):
- forms an angle of inclination, α, with respect to the horizontal axis of the cooking plate, adapted to drain residues resulting from the cooking process into the containment recess; and
- comprises at least four segments (2a-2d), each segment of the cooking surface:
   - forms the angle of inclination α in relation to the horizontal axis of the cooking plate; and
   - comprises ribs (4), which project from a base of the cooking surface (2), and are arranged radially along said surface and spaced apart from each other;
and in that:
the base of the cooking surface (2) comprises slots (5) arranged at the spacing between two consecutive ribs (4) and spaced apart from each other, and wherein the positioning of the slots (5) along the cooking surface (2) is such as to define a plurality of hierarchical-sized two-dimensional concentric annular shaped elements (6), wherein
each annular shaped element (6) groups together slots (5) of substantially the same length, defining the width of the respective element (6); and the width of each element (6) decreases as the size of said element (6) increases.

In another embodiment of the cooking plate, the amplitude of the angle of inclination α of the cooking surface with respect to the horizontal axis of the cooking plate is between 2.5° and 5°, preferably is 2.9°.

In another embodiment of the cooking plate, each rib (4) is trapezoidal prism shaped, and comprises:
- a top face, parallel to the base of the cooking surface (2), and arranged at a height h, from said base;
- side faces, which project from the base of the cooking surface (2) to the contiguous ends of the top face, at an angle β to said base.

More particularly, the top face of each rib (4) may have a width of at least 2.1 mm and a height h of at least 2.5 mm with respect to the base of the cooking surface (2), and the side faces of each rib (4) may be inclined at an angle β of 60° to the base of the cooking surface (2).

In another embodiment of the cooking plate, the ribs (4) are uniformly spaced from each other; preferably the spacing between ribs is at least 13 mm.

In another embodiment of the cooking plate, the slots (5) in the base of the cooking surface (2) are uniformly spaced from each other, and wherein the minimum width of each slot (5) is 3.5 mm.

In another embodiment of the cooking plate, the cooking surface (2) is subdivided into an intermediate section (2.1) and a centre section (2.2), and wherein:
- the plurality of concentric annular shaped elements (6) is formed in the intermediate section (2.1); and
- the centre section (2.2) is slotless.

In another embodiment of the cooking plate, the intermediate section (2.1) is comprised of three hierarchical-sized two-dimensional concentric annular shaped elements (6); preferably, each element (6) has a rounded squared ring shape; and preferably, the length of the slots
in a first element (6), is 23.5 mm;
in a second element (6) is 20 mm; and
in a third element (6) is 18 mm.

In another embodiment of the cooking plate, the centre section (2.2) of the cooking surface (2) is a movable part, detachable from the intermediate section (2.1), and comprising engaging means configured to provide removable attachment of the centre section (2.2) to the intermediate section (2.1).

In another embodiment of the cooking plate, the engaging means are additionally configured to provide rotation of the centre section (2.2) relative to the intermediate section (2.1).

In another embodiment of the cooking plate, a side of the cooking surface (2) opposite the centre section (2.2) is comprised of a diffuser.

In another embodiment of the cooking plate, said plate is obtainable by means of an aluminium injection casting process; and wherein
the coupling means are positioned along the periphery of the cooking plate opposite the peripheral section (1), and are configured to cause the cooking plate to rest, by action of its weight, in a stable manner on support means of a cooking grill.

In a second object of the present disclosure, it is disclosed a cooking grill characterised in that it comprises a cooking plate according to the first object of the present disclosure.

In a third embodiment of the present disclosure, it is disclosed a charcoal cooking grill comprising a charcoal depositing vessel, characterised in that it additionally comprises a cooking plate according to the first object of the present disclosure. More particularly, the charcoal depositing vessel and the cooking plate are arranged in relation to each other so that the movable part constituting the centre section (2.2) of the cooking surface (2) of the cooking plate is arranged to move from a close position to an open position so as to enable access to the charcoal depositing vessel.

Of course, the preferred embodiments shown above are combinable, in the different possible forms, being herein avoided the repetition all such combinations.

## Claims

1. Cooking plate for a cooking grill comprising a peripheral section (1) formed by a containment recess, a cooking surface (2) and coupling means (3) configured to operatively connect the cooking plate to a grill; the cooking plate being **characterised in that** the cooking surface (2):
- forms an angle of inclination, α, with respect to the horizontal axis of the cooking plate, adapted to drain residues resulting from the cooking process into the containment recess; and
- comprises at least four segments (2a-2d), each segment of the cooking surface:
- forms the angle of inclination α in relation to the horizontal axis of the cooking plate; and
- comprises ribs (4), which project from a base of the cooking surface (2), and are arranged radially along said surface and spaced apart from each other;
and **in that:**
the base of the cooking surface (2) comprises slots (5) arranged at the spacing between two consecutive ribs (4) and spaced apart from each other, and wherein the positioning of the slots (5) along the cooking surface (2) is such as to define a plurality of hierarchical-sized two-dimensional concentric annular shaped elements (6), wherein
each annular shaped element (6) groups together slots (5) of substantially the same length, defining the width of the respective element (6); and the width of each element (6) decreases as the size of said element (6) increases.

2. Cooking plate according to claim 1, wherein the amplitude of the angle of inclination α of the cooking surface with respect to the horizontal axis of the cooking plate is between 2.5° and 5°, preferably is 2.9°.

3. Cooking plate according to any of the preceding claims, wherein each rib (4) is trapezoidal prism shaped, and comprises:
- a top face, parallel to the base of the cooking surface (2), and arranged at a height h, from said base;
- side faces, which project from the base of the cooking surface (2) to the contiguous ends of the top face, at an angle β to said base.

4. Cooking plate according to claim 3, wherein the top face of each rib (4) has a width of at least 2.1 mm and a height h of at least 2.5 mm with respect to the base of the cooking surface (2).

5. Cooking plate according to claim 3 or 4, wherein the side faces of each rib (4) are inclined at an angle β of 60° to the base of the cooking surface (2).

6. Cooking plate according to any of the preceding claims, wherein the ribs (4) are uniformly spaced from each other; preferably the spacing between ribs is at least 13 mm.

7. Cooking plate according to any of the preceding claims, wherein the slots (5) in the base of the cooking surface (2) are uniformly spaced from each other, and wherein the minimum width of each slot (5) is 3.5 mm.

8. Cooking plate according to any of the preceding claims, wherein the cooking surface (2) is subdivided into an intermediate section (2.1) and a centre section (2.2), and wherein:
- the plurality of concentric annular shaped elements (6) is formed in the intermediate section (2.1); and
- the centre section (2.2) is slotless.

9. Cooking plate according to claim 8, wherein the intermediate section (2.1) is comprised of three hierarchical-sized two-dimensional concentric annular shaped elements (6); preferably, each element (6) has a rounded squared ring shape; and preferably, the length of the slots
in a first element (6), is 23.5 mm;
in a second element (6) is 20 mm; and
in a third element (6) is 18 mm.

10. Cooking plate according to claim 8 or 9 wherein the centre section (2.2) of the cooking surface (2) is a movable part, detachable from the intermediate section (2.1), and comprising engaging means configured to provide removable attachment of the centre section (2.2) to the intermediate section (2.1).

11. Cooking plate according to claim 10, wherein the engaging means are additionally configured to provide rotation of the centre section (2.2) relative to the intermediate section (2.1).

12. Cooking plate according to any one of claims 9 to 11, wherein a side of the cooking surface (2) opposite the centre section (2.2) is comprised of a diffuser.

13. Cooking plate according to any one of the preceding claims obtainable by means of an aluminium injection casting process; and wherein
the coupling means are positioned along the periphery of the cooking plate opposite the peripheral section (1), and are configured to cause the cooking plate to rest, by action of its weight, in a stable manner on support means of a cooking grill.

14. A cooking grill **characterised in that** it comprises a cooking plate according to any one of claims 1 to 13.

15. Charcoal cooking grill comprising a charcoal depositing vessel, **characterised in that** it additionally comprises a cooking plate according to any one of claims 10 to 13; wherein
the charcoal depositing vessel and the cooking plate being arranged in relation to each other so that the movable part constituting the centre section (2.2) of the cooking surface (2) of the cooking plate is projected to move from a close position to an open position so as to enable access to the charcoal depositing vessel.
